# EUROPEAN PATENT SPECIFICATION

(11) **EP 2 577 138 B1**
(45) Date of publication and mention of the grant of the patent: **23.04.2014**
(21) Application number: 11729693.9
(22) Date of filing: 23.05.2011
(51) Int. Cl.: F16K 35/06, B60R 25/08

(54) **IMPROVED LOCKING DEVICE OF HYDRAULIC OR PNEUMATIC SYSTEMS**
VERBESSERTE VERRIEGELUNGSVORRICHTUNG VON HYDRAULISCHEN ODER PNEUMATISCHEN SYSTEMEN
DISPOSITIF DE VERROUILLAGE AMÉLIORÉ DE SYSTÈMES HYDRAULIQUES OU PNEUMATIQUES

(30) Priority: 27.05.2010 IT MI20100954
(43) Date of publication of application: 10.04.2013
(73) Proprietor: Mechanical Line Solutions S.r.l., 20156 Milano (IT)
(72) Inventor: BARTESAGHI, Dario, IT-20156 Milano (IT)
(74) Representative: Riccardi, Sergio
(86) International application number: PCT/IB2011/001115
(87) International publication number: WO 2011/148249

(56) References cited:
- GB-A- 2 266 352
- US-A- 4 964 677
- US-A1- 2006 162 784

## Description

The present invention relates to a key-controlled locking device suitable for pneumatic or hydraulic systems, and particularly to a locking device provided with an oil leakage system able to operate every time a breaking of the device is attempted.

The locking devices of pneumatic or hydraulic systems are adopted in order to prevent an unauthorized access to the system they are applied to. The prior art locking systems can be in most of the cases described as on-off valves interposed between a pneumatic or hydraulic supply unit and a given machine or mechanism supplied by said unit. In such cases the shut-off member within the above valve is controlled by a key such that the authorized personnel by turning the key can operate the supply unit thus allowing the machine or mechanism to be started. The various known locking devices are then different in terms of construction solutions selected for the particular adopted shut-off member and in terms of operative functions achieved by the valve inner hydraulic circuit which, in any case, is in communication with both inlet port and outlet port of said devices.

The locking devices are generally constituted by a main body, in which the abovementioned inner hydraulic circuit is housed together with the corresponding shut-off member, and a protrusion of said main body in which a key lock operatively connected with control member of said shut-off member is in turn housed. A device of this kind is disclosed in document US 4 964 677 A.

Therefore all the prior art locking devices leave the opportunity to shear such protrusion with every suitable tool for everyone intendeds to tamper the locking device, so as to freely and directly access the shut-off member or, alternatively, control member thereof in order to cause the working fluid to flow and, consequently, the machine or the mechanism to operate. This drawback of the prior art devices can be partially overcome by providing the key lock protrusion with an armour consisting of, for example, hardened steel or other materials or performing a surface treatment of the same protrusion: however, in such manner, the only advantage is to increase time required to shear the protrusion and, very rarely, to affect the desired final result, that is removal of the key lock.

Main object of the locking device suitable for hydraulic or pneumatic systems according to the present invention is therefore to provide an improved arrangement of the valve inner hydraulic circuit such that, even if a removal of the key lock from its protrusion occurs regardless of how it has been carried out, it causes leakage of the working fluid which irreversibly compromises its flow from inlet channel to outlet channel of the locking device.

The advantages and features of the locking device suitable for hydraulic and pneumatic systems according to the present invention will be clear from the following detailed description of a preferred embodiment thereof taken in conjunction with the annexed drawings in which:
fig. 1 is a perspective view of a preferred embodiment of the locking device according to the present invention showing the inner hydraulic circuit of said device in phantom, and
fig. 2 is a partial cross sectional view of the device in fig. 1 showing the device in its open position (on the right hand side) and in its closed position (on the left hand side), respectively.

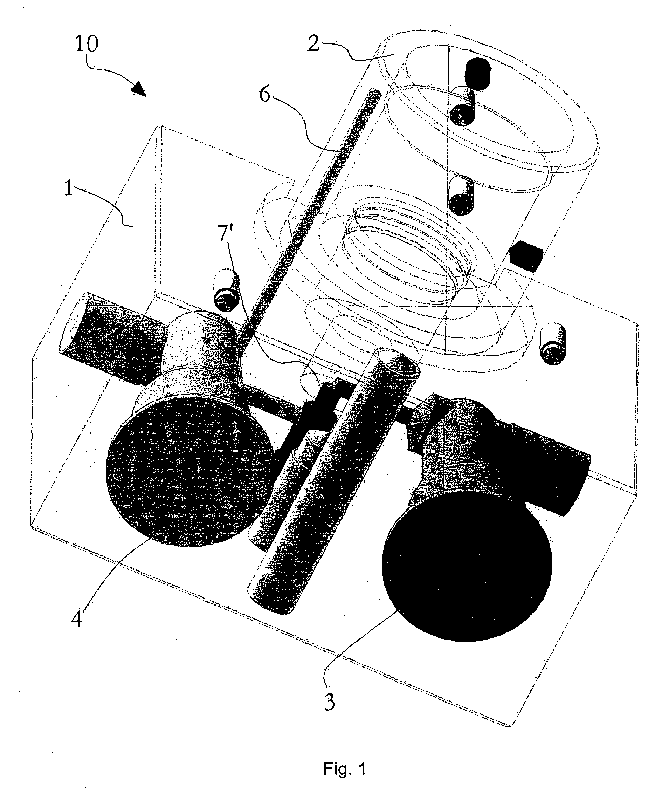

With reference now to fig. 1 a locking device 10 suitable for pneumatic or hydraulic systems is shown constituted by a main body 1 and a cylindrical slot 2 integrally formed into said body 1. Within the body 1 the various channels constituting the inner hydraulic circuit of the device 10 and connecting an inlet channel 3 with an outlet channel 4 of the working fluid can be recognized. Arrangement of the connecting inner channels can be any of the prior art locking devices as the one shown in fig. 1, in which particularly a shut-off member (not shown) is displaced into the indicated position 7' so as to stop the working fluid flow from said inlet channel 3 to said outlet channel 4. The cylindrical slot 2 is internally hollow and in communication with the inner hydraulic circuit such that control member of said shut-off member and key lock coupled therewith can be housed.

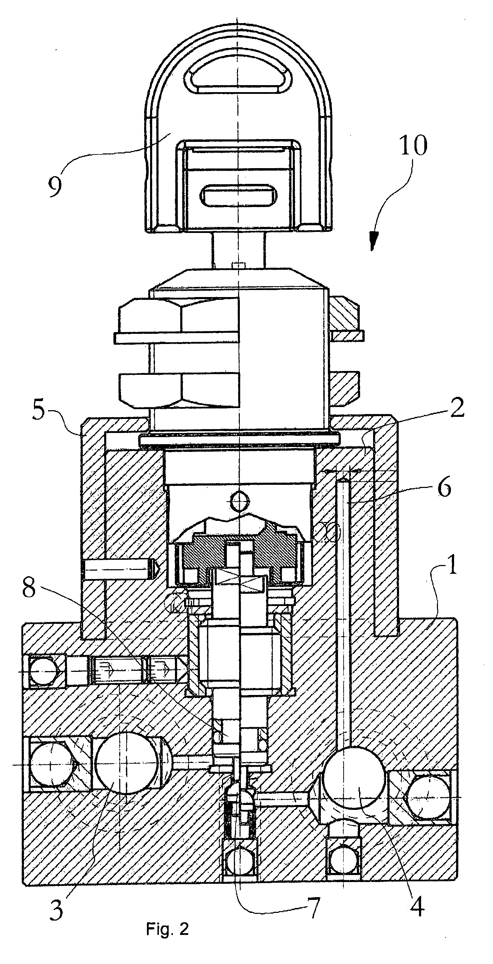

Turning now to fig. 2, the above said shut-off member 7 and its control member 8 together with a security key 9 are shown. Turning of said key 9 causes, through corresponding key lock, the control member 8 to bias downwardly the shut-off member 7 thus allowing flow of the working fluid and normal start of the machine the device 10 is applied to. It is therefore clear that shear of the slot 2, and therefore control member 8 and/or the key lock, will allow removal thereof and permit to freely access the shut-off member and manually move it.

In order to avoid even this tampering approach, which is known as the most effective since it allows access to inner hydraulic circuit in almost all prior art locking devices, the present invention provides addition to said inner hydraulic circuit of a blind channel 6 communicating, for example, with the outlet channel 4 of the working fluid and vertically extending within said main body 1 and specifically into almost the whole cylindrical wall of the hollow of said slot 2. Therefore a shear of the key lock cannot occur without also involving a shear of said blind channel 6 which, consequently, will be no more blind but opened exactly at the shear position. Oil or any other working fluid adopted contained upstream the channel 6 - and obviously portion of the external hydraulic circuit - will be free to leak under the pressure being in that portion of the hydraulic circuit. A subsequent attempt of shut-off member opening or tampering of like mechanism having been provided in the locking device for a flow control unavoidably leads to a continuous oil leakage from channel 6 and subsequent pressure drop into the outlet channel 4 and the downstream hydraulic circuit portion, thus resulting in the impossibility to start machine. In order to discourage any attempt to shear the key lock of said device 10 an armour 5 constituted, for example, by hardened steel can be further provided around the slot cylindrical wall.

As previously said in the just provided detailed description the improved locking device 10 according to the present invention can be fit to any arrangement of the inner hydraulic circuit including even those circuits of the state of the art and any control member and mechanism of the shut-off member of said circuits.

## Claims

1. A key-controlled locking device (10) suitable for hydraulic or pneumatic systems comprising:
(i) a main body (1) integral with
(ii) a slot (2) housing a key lock of said key,
(iii) at least one inlet channel (3) for the working fluid into said device (10),
(iv) at least one outlet channel (4) for the working fluid from said device (10),
(v) a hydraulic or pneumatic circuit within said device (10) connected with said at least one inlet channel (3) and outlet channel (4), said inner circuit being able to be sectioned by a member (8) coupled to said key lock,
**characterized by** internally comprising also a channel (6) blind at a section thereof next to the external surface of said slot and in communication with at least one of said at least one inlet channel (3), outlet channel (4) and inner circuit.

2. The device (10) according to claim 1, wherein said main body (1) is a metallic block and said slot (2) is internally hollow and said blind channel (6) extends vertically from said outlet channel (4) within the peripheral wall of said slot (2).

3. The device (10) according to claim 1 or 2, wherein said slot (2) is provided with an armour (5) at its external surface.

## Patentansprüche

1. Verriegelungsschlüsselvorrichtung (10) von hydraulischen oder pneumatischen Systemen mit den folgenden Merkmalen:
(i) ein Hauptkörper (1) fest an
(ii) einem Sitz (2) für die Aufnahme des Schlüsselblocks;
(iii) mindestens ein Einlasskanal (3) für den Einlauf des Arbeitsmittels in die Vorrichtung (10);
(iv) mindestens ein Ablasskanal (4) für den Ablauf des Arbeitsmittels aus der Vorrichtung (10);
(v) ein hydraulischer oder pneumatischer Kreislauf innerhalb der Vorrichtung (10), der mit dem mindestens einem Einlasskanal (3) und Ablasskanal (4) verbunden ist, worin der besagte innere Kreislauf von einem mit dem Schlüsselblock verbundenen Element (8) getrennt werden kann,
**dadurch gekennzeichnet, dass** die Vorrichtung einen Blindkanal (6) aufweist , der an einem an der Oberfläche des Sitzes anliegenden Schnitt der Vorrichtung angeordnet ist und mit mindestens einem Glied unter einem Einlasskanal (3), einem Ablasskanal (4) und dem inneren Kreislauf in Verbindung ist.

2. Vorrichtung (10) nach Anspruch 1, worin der Hauptkörper (1) ein Metallblock ist, der Sitz (2) innen hohl ist und der Blindkanal (6) sich senkrecht aus dem Ablasskanal (4) in der Aussenwand des Sitzes (2) erstreckt.

3. Vorrichtung (1) nach Anspruch 1 bzw. 2, worin der Sitz (2) eine Panzerung (5) an seiner äusseren Oberfläche aufweist.

## Revendications

1. Dispositif (10) de verrouillage avec clé de commande pour systèmes hydrauliques ou pneumatiques, comprenant:
(i) un corps principal (1) solidaire avec
(ii) un siège (2) de logement du bloc de la dite clé;
(iii) au moins un canal d'entrée (3) dans le dispositif (10) pour le fluide de travail des dits systèmes;
(iv) au moins un canal de sortie (4) du dispositif (10) pour le fluide de travail des dits systèmes;
(v) un circuit hydraulique ou pneumatique à l'intérieur du dit dispositif (10), connecté aux dits au moins un canal d'entrée (3) et au moins un canal de sortie (4), le dit circuit intérieur pouvant être sectionné par un élément (8) couplé avec le dit bloc de clé,
**caractérisé en ce que** le dispositif comprend à l'intérieur un canal borgne (6) à une section près de la surface extérieure du dit siège (2) et communiquant avec au moins un des dits au moins un canal d'entrée (3), un canal de sortie (4) et le circuit intérieur.

2. Dispositif (10) selon la revendication 1, dont le dit corps principal (1) est un bloc métallique, le dit siège (2) est creux à l'intérieur et le dit canal borgne (6) s'étend verticalement du dit canal de sortie (4) dans la paroi périphérique du dit siège (2).

3. Dispositif (10) selon la revendication 1 ou 2, dont le dit siège (2) est muni d'un blindage (5) sur sa surface extérieure.
